# EUROPEAN PATENT APPLICATION

(11) **EP 4 456 233 A1**
(43) Date of publication of application: **30.10.2024**
(21) Application number: 22911199.2
(22) Date of filing: 20.12.2022
(51) Int. Cl.: H01M 10/054, H01M 4/58, H01M 4/587, H01M 10/0562, H01M 10/0585

(54) **ALL-SOLID-STATE SODIUM-ION SECONDARY BATTERY**

(30) Priority: 22.12.2021 JP 2021208326
(71) Applicant: Nippon Electric Glass Co., Ltd., Otsu-shi, Shiga 520-8639 (JP)
(72) Inventor: TSUNODA, Kei, Otsu-shi, Shiga 520-8639 (JP); YAMAUCHI, Hideo, Otsu-shi, Shiga 520-8639 (JP)
(74) Representative: Tetzner, Michael
(86) International application number: PCT/JP2022/046759
(87) International publication number: WO 2023/120497

(57) **Abstract**

Provided is an all-solid-state sodium-ion secondary battery having an excellent charge-discharge efficiency and capable of increasing the energy density. An all-solid-state sodium-ion secondary battery 1 includes: a solid electrolyte layer 2 having a first principal surface 2a and a second principal surface 2b opposed to each other; a positive electrode layer 3 provided on the first principal surface 2a of the solid electrolyte layer 2; and a negative electrode layer 4 provided on the second principal surface 2b of the solid electrolyte layer 2, wherein a capacity ratio of the negative electrode layer 4 to the positive electrode layer 3 (negative electrode layer/positive electrode layer) is not less than 0.10 and not more than 1.10.

## Description

### [Technical Field]

The present invention relates to all-solid-state sodium-ion secondary batteries.

### [Background Art]

Lithium-ion secondary batteries have secured their place as high-capacity and light-weight power sources essential for mobile devices, electric vehicles, and so on. However, current lithium-ion secondary batteries employ as their electrolytes, mainly, combustible organic electrolytic solutions, which raises concerns about the risk of fire or explosion. As a solution to this problem, all-solid-state batteries, such as all-solid-state lithium-ion batteries, in which a solid electrolyte is used instead of an organic electrolytic solution have been under development.

In the meantime, all-solid-state batteries have a problem of difficulty in charging and discharging them at high rates because they have difficulty forming an ion path between an active material and a solid electrolyte. Therefore, the solid electrolyte has also been variously considered for the purpose of forming an ion path. Particularly, sulfide-based solid electrolytes exhibit plasticity and, therefore, it has been expected that when they are cold pressed together with an active material, their particles closely adhere to each other to form an ion path. However, sulfide-based solid electrolytes have a problem of unstableness to the atmosphere and emission of toxic gases. In contrast, oxide-based solid electrolytes are stable to the atmosphere and are therefore expected to provide safer batteries. However, oxide-based solid electrolytes having a lithium-ion conductivity have a problem of low ionic conductivity and difficulty in operating at low temperature and achieving high power. To cope with this, there have been developed all-solid-state sodium-ion secondary batteries in which an oxide-based solid electrolyte having a sodium-ion conductivity is used as an alternative to the above oxide-based solid electrolyte (see, for example, Patent Literature 1).

### [Citation List]

### [Patent Literature]

[PTL 1]
JP-A-2010-15782

### [Summary of Invention]

### [Technical Problem]

Recently, secondary batteries as power sources for electric vehicles are being required to be those having higher energy density and higher capacity for long-distance cruising.

In all-solid-state sodium-ion secondary batteries, graphite as used in lithium-ion secondary batteries is difficult to use as a negative electrode material and, therefore, the use of hard carbon or the like has been considered. However, hard carbon has a higher capacity loss due to an initial irreversible capacity compared to graphite and, therefore, has a problem of decrease in energy density with the use thereof in all-solid-state sodium-ion secondary batteries.

An object of the present invention is to provide an all-solid-state sodium-ion secondary battery having an excellent charge-discharge efficiency and capable of increasing the energy density.

### [Solution to Problem]

Aspects of an all-solid-state sodium-ion secondary battery that solves the above challenge will be described below.

An all-solid-state sodium-ion secondary battery of Aspect 1 in the present invention includes: a solid electrolyte layer having a first principal surface and a second principal surface opposed to each other; a positive electrode layer provided on the first principal surface of the solid electrolyte layer; and a negative electrode layer provided on the second principal surface of the solid electrolyte layer, wherein a capacity ratio of the negative electrode layer to the positive electrode layer (negative electrode layer/positive electrode layer) is not less than 0.10 and not more than 1.10.

In an all-solid-state sodium-ion secondary battery of Aspect 2, the positive electrode layer preferably contains a positive-electrode active material made of a crystallized glass containing crystals represented by a general formula NaₓM_{y}P₂O_{z} (where 1 ≤ x ≤ 2.8, 0. 95 ≤ y ≤ 1.6, 6.5 ≤ z ≤ 8, and M is at least one selected from the group consisting of Fe, Ni, Co, Mn, and Cr) .

An all-solid-state sodium-ion secondary battery of Aspect 3 is the all-solid-state sodium-ion secondary battery according to Aspect 1 or 2, wherein the negative electrode layer preferably contains a negative-electrode active material made of hard carbon.

An all-solid-state sodium-ion secondary battery of Aspect 4 is the all-solid-state sodium-ion secondary battery according to any one of Aspects 1 to 3, wherein it is preferred that the positive electrode layer contains a positive-electrode active material made of a crystallized glass containing crystals represented by a general formula NaₓM_{y}P₂O_{z} (where 1 ≤ x ≤ 2.8, 0.95 ≤ y ≤ 1.6, 6.5 ≤ z ≤ 8, and M is at least one selected from the group consisting of Fe, Ni, Co, Mn, and Cr), the negative electrode layer contains a negative-electrode active material made of hard carbon, and a thickness ratio of the negative electrode layer to the positive electrode layer (negative electrode layer/positive electrode layer) is not less than 0.05 and not more than 0.45.

An all-solid-state sodium-ion secondary battery of Aspect 5 is the all-solid-state sodium-ion secondary battery according to any one of Aspects 1 to 4, wherein the solid electrolyte layer preferably contains a solid electrolyte being at least one selected from the group consisting of β-alumina, β"-alumina, and NASICON crystals.

An all-solid-state sodium-ion secondary battery of Aspect 6 is the all-solid-state sodium-ion secondary battery according to any one of Aspects 1 to 5, wherein metal sodium preferably precipitates inside the negative electrode layer upon completion of charging of the battery.

An all-solid-state sodium-ion secondary battery of Aspect 7 in the present invention includes: a solid electrolyte layer having a first principal surface and a second principal surface opposed to each other; a positive electrode layer provided on the first principal surface of the solid electrolyte layer; and a negative electrode layer provided on the second principal surface of the solid electrolyte layer, wherein the positive electrode layer contains a positive-electrode active material made of a crystallized glass containing crystals represented by a general formula NaₓM_{y}P₂O_{z} (where 1 ≤ x ≤ 2.8, 0.95 ≤ y ≤ 1.6, 6.5 ≤ z ≤ 8, and M is at least one selected from the group consisting of Fe, Ni, Co, Mn, and Cr), the negative electrode layer contains a negative-electrode active material made of hard carbon, and a thickness ratio of the negative electrode layer to the positive electrode layer (negative electrode layer/positive electrode layer) is not less than 0.05 and not more than 0.45.

### [Advantageous Effects of Invention]

The present invention enables provision of an all-solid-state sodium-ion secondary battery having an excellent charge-discharge efficiency and capable of increasing the energy density.

### [Brief Description of Drawings]

[Fig. 1]

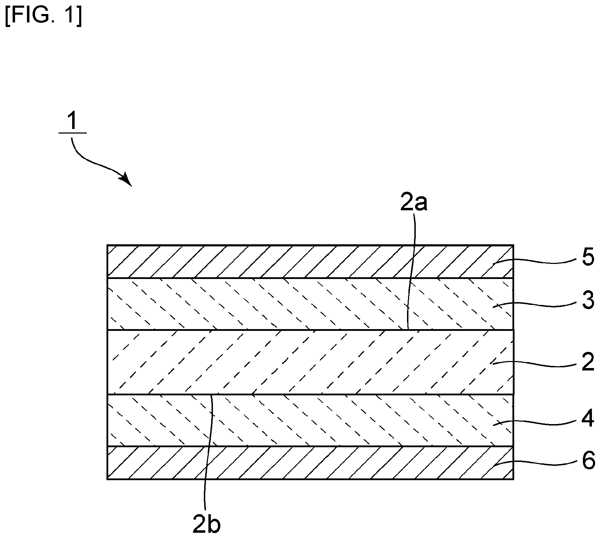

   Fig. 1 is a schematic cross-sectional view showing an all-solid-state sodium-ion secondary battery according to an embodiment of the present invention.
[Fig. 2]

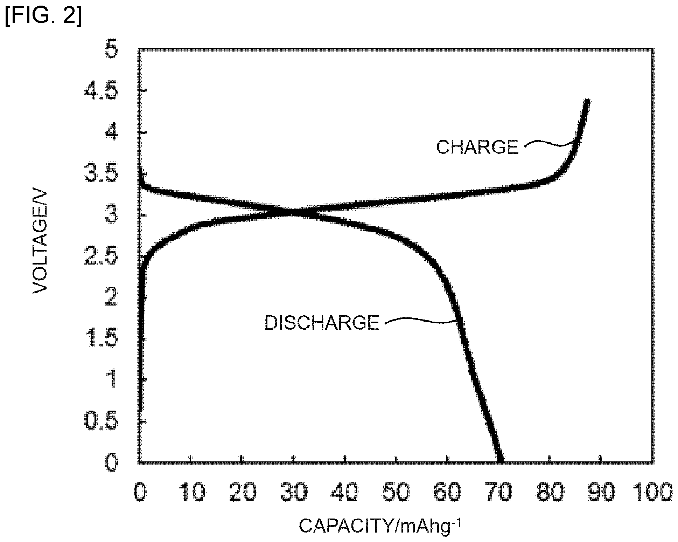

   Fig. 2 is a graph showing results of a charge-discharge test in Example 1.
[Fig. 3]

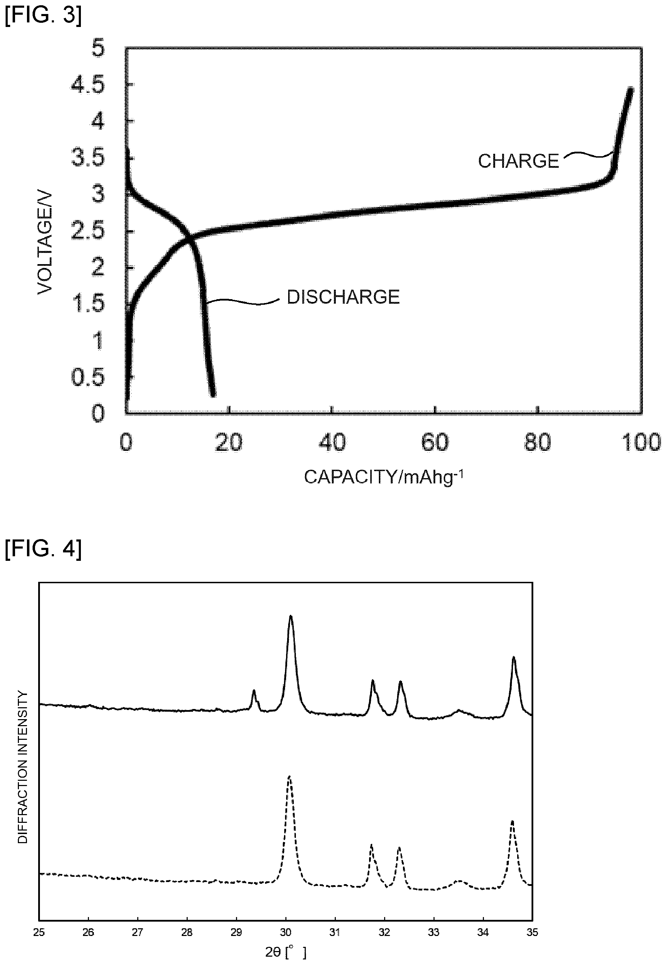

   Fig. 3 is a graph showing results of a charge-discharge test in Comparative Example 7.
[Fig. 4]
   Fig. 4 shows X-ray diffraction spectra of a negative electrode layer in an all-solid-state cell produced in Example 1.
[Fig. 5]

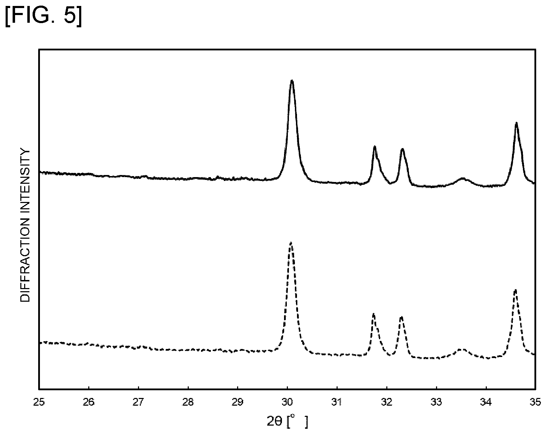

   Fig. 5 shows X-ray diffraction spectra of a negative electrode layer in an all-solid-state cell produced in Comparative Example 1.
[Fig. 6]

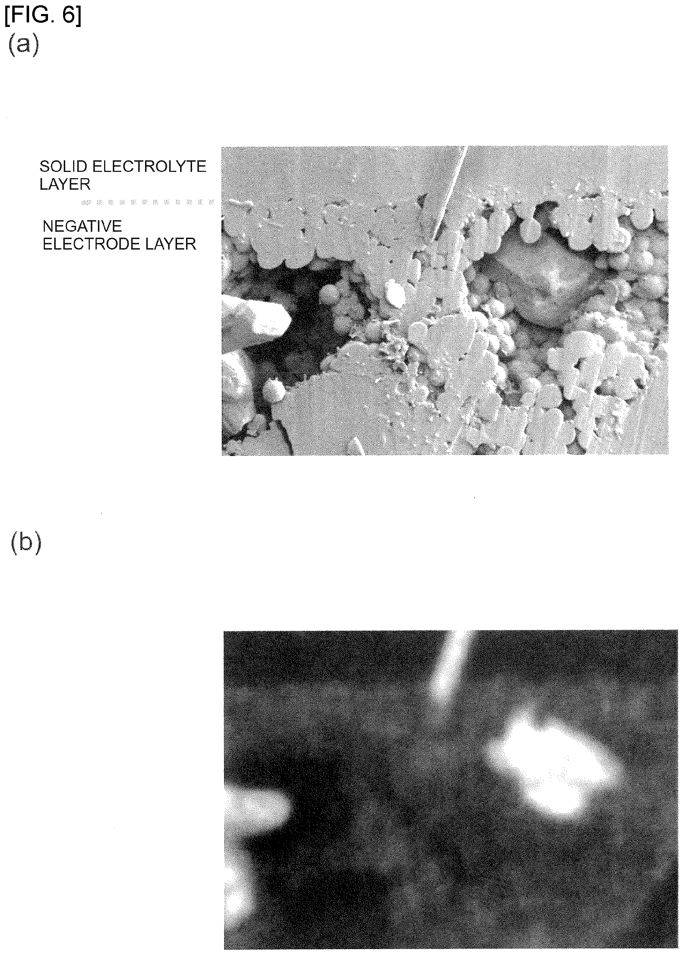

   Fig. 6(a) is a SEM image of a cross section of the negative electrode layer at the completion of charging of the all-solid-state cell produced in Example 1 and Fig. 6(b) is an elemental mapping image of Na in the cross section of the negative electrode layer by SEM-EDX at the completion of charging.
[Fig. 7]

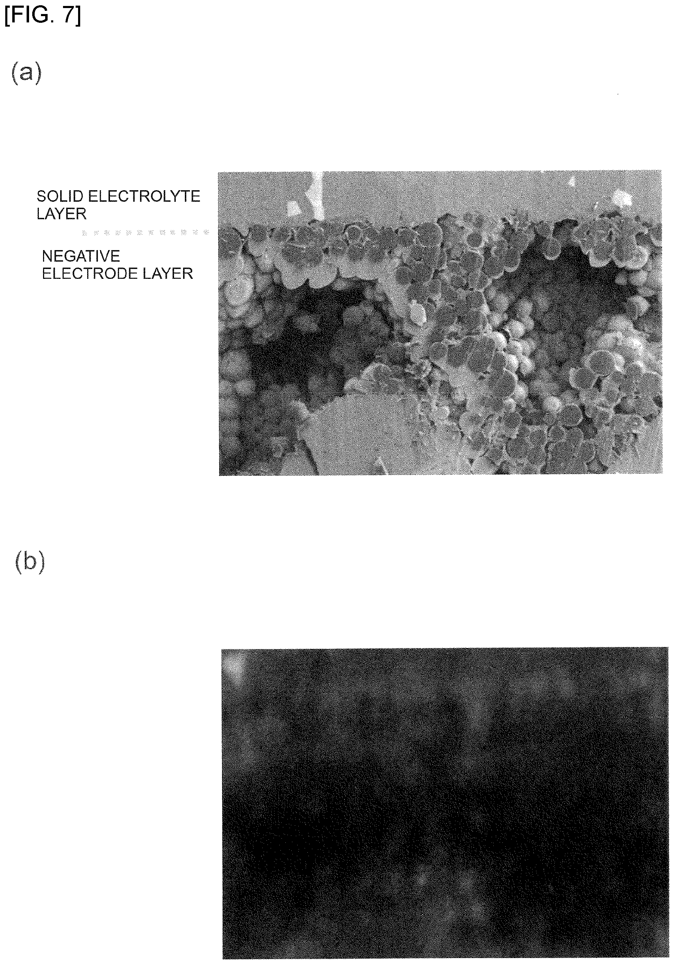

   Fig. 7(a) is a SEM image of a cross section of the negative electrode layer at the completion of discharging of the all-solid-state cell produced in Example 1 and Fig. 7(b) is an elemental mapping image of Na in the cross section of the negative electrode layer by SEM-EDX at the completion of discharging.

### [Description of Embodiments]

Hereinafter, a description will be given of preferred embodiments. However, the following embodiments are merely illustrative and the present invention is not intended to be limited to the following embodiments. Throughout the drawings, members having substantially the same functions may be referred to by the same reference characters.

### (All-Solid-State Sodium-Ion Secondary Battery)

Fig. 1 is a schematic cross-sectional view showing an all-solid-state sodium-ion secondary battery according to an embodiment of the present invention. As shown in Fig. 1, an all-solid-state sodium-ion secondary battery 1 includes a solid electrolyte layer 2, a positive electrode layer 3, a negative electrode layer 4, a first current collector layer 5, and a second current collector layer 6.

In this embodiment, the solid electrolyte layer 2 is made of a sodium-ion conductive oxide. Furthermore, the solid electrolyte layer 2 has a first principal surface 2a and a second principal surface 2b opposed to each other.

The positive electrode layer 3 is provided on the first principal surface 2a of the solid electrolyte layer 2. The positive electrode layer 3 contains a positive-electrode active material capable of absorbing and releasing sodium. In this embodiment, the positive electrode layer 3 contains a positive-electrode active material made of a crystallized glass containing crystals represented by a general formula NaₓM_{y}P₂O_{z} (where 1 ≤ x ≤ 2.8, 0. 95 ≤ y ≤ 1.6, 6.5 ≤ z ≤ 8, and M is at least one selected from the group consisting of Fe, Ni, Co, Mn, and Cr). The first current collector layer 5 is provided on a principal surface of the positive electrode layer 3 located on the opposite side of the solid electrolyte layer 2. However, the first current collector layer 5 may not necessarily be provided.

The negative electrode layer 4 is provided on the second principal surface 2b of the solid electrolyte layer 2. The negative electrode layer 4 contains a negative-electrode active material capable of absorbing and releasing sodium. In this embodiment, the negative electrode layer 4 contains a negative-electrode active material made of hard carbon. The second current collector layer 6 is provided on a principal surface of the negative electrode layer 4 located on the opposite side of the solid electrolyte layer 2. However, the second current collector layer 6 may not necessarily be provided.

In this embodiment, the capacity ratio of the negative electrode layer 4 to the positive electrode layer 3 (negative electrode layer/positive electrode layer) is not less than 0.10 and not more than 1.10. Therefore, the all-solid-state sodium-ion secondary battery 1 has an excellent charge-discharge efficiency and can increase the energy density. A detailed description will be given below of this point.

In all-solid-state sodium-ion secondary batteries, graphite as used in lithium-ion secondary batteries is difficult to use as a negative electrode material and, therefore, the use of hard carbon or the like is expected. However, hard carbon has a higher capacity loss due to an initial irreversible capacity compared to graphite and, therefore, has a problem of decrease in energy density with the use thereof in all-solid-state sodium-ion secondary batteries.

Therefore, when in an all-solid-state sodium-ion secondary battery the capacity of the negative electrode layer (supporting capacity) is larger than the capacity of the positive electrode layer (i.e., in the case of a negative electrode excess), sodium ions are consumed for the irreversible capacity of the negative electrode layer and, thus, the energy density tends to decrease. On the other hand, when the capacity of the positive electrode layer is larger than the capacity of the negative electrode layer (i.e., in the case of a positive electrode excess), the proportion of the amount of sodium ions consumed by the negative electrode layer to the amount of sodium ions released by the positive electrode layer can be reduced, which enables increase in charge-discharge efficiency and increase in energy density.

In the meantime, when hard carbon is used for the negative electrode layer, sodium ions released from the positive electrode layer during charging are absorbed between carbon layers in the hard carbon and into closed pores in carbon particles of the hard carbon. Therefore, in the case of a positive electrode excess, some of the sodium ions may not be able to be taken into the hard carbon and may precipitate (electrocrystallize) as metal sodium. In this case, in a liquid-based battery, precipitated metal sodium may reach the positive electrode layer through the electrolyte to cause a short-circuit, which presents a safety problem.

Unlike the above, in an all-solid-state sodium-ion secondary battery, because of the solid electrolyte having excellent ionic conductivity, sodium elements released from the negative electrode layer during discharging can be easily ionized and metal sodium is less likely to precipitate along grain boundaries in the inside of the solid electrolyte. Therefore, internal short-circuit in the battery can be prevented. Furthermore, even if a short-circuit occurs, the risk of fire is small. Therefore, even when a positive electrode excess is adopted for the battery, the battery can be safely used.

Metal sodium having not electrocrystallized in the inside of the solid electrolyte precipitates on the surface of the hard carbon, at the interface between the solid electrolyte and the negative electrode layer or in voids in the inside of the negative electrode layer and, therefore, is less likely to react with moisture and can be safely used. Particularly, when the negative electrode layer is made of a composite of hard carbon and an oxide-based solid electrolyte, metal sodium precipitates as it is encapsulated in the composite and, therefore, is even less likely to react with moisture and can be more safely used. Furthermore, metal sodium precipitating on the surface of hard carbon, at the interface between the solid electrolyte and the negative electrode layer or in voids in the inside of the negative electrode layer can reversibly precipitate and dissolve during charging and discharging. The reason for this is not clear, but can be explained that because the solid electrolyte has higher reduction resistance than an electrolytic solution for use in a liquid-based battery, metal sodium is less likely to degrade or the sodium-ion conduction path is less likely to interrupt even when metal sodium precipitates. Thus, the charge-discharge efficiency can be further increased and the energy density can be further increased.

As thus far described, the Inventors found that when, in the all-solid-state sodium-ion secondary battery, the capacity ratio of the negative electrode layer to the positive electrode layer (negative electrode layer/positive electrode layer) is not less than 0.10 and not more than 1.10, the charge-discharge efficiency and the energy density can be increased while the safety is ensured.

In the present invention, the capacity ratio of the negative electrode layer to the positive electrode layer (negative electrode layer/positive electrode layer) is not more than 1.10, preferably not more than 0.80, and more preferably not more than 0.60. When the capacity ratio of the negative electrode layer to the positive electrode layer (negative electrode layer/positive electrode layer) is the above upper limit or less, the charge-discharge efficiency of the all-solid-state sodium-ion secondary battery can be further increased and the energy density can be further increased.

Furthermore, the capacity ratio of the negative electrode layer to the positive electrode layer (negative electrode layer/positive electrode layer) is not less than 0.10, preferably not less than 0.30, and more preferably not less than 0.40. When the capacity ratio of the negative electrode layer to the positive electrode layer (negative electrode layer/positive electrode layer) is the above lower limit or more, the cycle characteristics of the all-solid-state sodium-ion secondary battery 1 can be further increased.

The capacity ratio of the negative electrode layer to the positive electrode layer (negative electrode layer/positive electrode layer) is not less than 0.10 and not more than 1.10, preferably not less than 0.30 and not more than 0.80, and more preferably not less than 0.40 and not more than 0.60. In this case, the charge-discharge efficiency of the all-solid-state sodium-ion secondary battery can be further increased and the energy density can be further increased. Furthermore, the precipitation of metal sodium at the negative electrode layer can be controlled to a suitable amount at which the electrode structure is not broken and, therefore, the cycle characteristics of the all-solid-state sodium-ion secondary battery can be easily increased. At the same time, the precipitation of metal sodium in the solid electrolyte layer can be suppressed and, therefore, a short-circuit is less likely to occur.

The capacity ratio of the negative electrode layer to the positive electrode layer (negative electrode layer/positive electrode layer) can be adjusted, for example, by the types of materials constituting the positive electrode layer and the negative electrode layer, the proportion of the positive-electrode active material or the negative-electrode active material, or the thickness of the negative electrode layer relative to the positive electrode layer.

For example, when, as in the above embodiment, the positive electrode layer 3 contains a positive-electrode active material made of a crystallized glass containing crystals represented by a general formula NaₓM_{y}P₂O_{z} (where 1 ≤ x ≤ 2.8, 0.95 ≤ y ≤ 1.6, 6.5 ≤ z ≤ 8, and M is at least one selected from the group consisting of Fe, Ni, Co, Mn, and Cr) and the negative electrode layer 4 contains a negative-electrode active material made of hard carbon, the thickness ratio of the negative electrode layer 4 to the positive electrode layer 3 (negative electrode layer/positive electrode layer) is preferably not more than 0.45, more preferably not more than 0.35, and even more preferably not more than 0.25. When the thickness ratio of the negative electrode layer 4 to the positive electrode layer 3 (negative electrode layer/positive electrode layer) is the above upper limit or less, the charge-discharge efficiency of the all-solid-state sodium-ion secondary battery 1 can be further increased and the energy density can be further increased.

Furthermore, the thickness ratio of the negative electrode layer 4 to the positive electrode layer 3 (negative electrode layer/positive electrode layer) is preferably not less than 0.025, more preferably not less than 0.050, and even more preferably not less than 0.150. When the thickness ratio of the negative electrode layer 4 to the positive electrode layer 3 (negative electrode layer/positive electrode layer) is the above lower limit or more, the cycle characteristics of the all-solid-state sodium-ion secondary battery 1 can be further increased.

In another embodiment of the present invention, the thickness ratio of the negative electrode layer to the positive electrode layer (negative electrode layer/positive electrode layer) is not less than 0.05 and not more than 0.45. Also in this case, the all-solid-state sodium-ion secondary battery has an excellent charge-discharge efficiency and can increase the energy density.

In the present invention, the thickness ratio of the negative electrode layer to the positive electrode layer (negative electrode layer/positive electrode layer) may be not less than 0.05 and not more than 0.45, preferably not less than 0.10 and not more than 0.35, and more preferably not less than 0.125 and not more than 0.30. In this case, the charge-discharge efficiency of the all-solid-state sodium-ion secondary battery can be further increased and the energy density can be further increased. In addition, metal sodium can be easily precipitated in the negative electrode layer and the safety of the all-solid-state sodium-ion secondary battery can be easily increased. At the same time, the precipitation of metal sodium in the solid electrolyte layer can be suppressed and, therefore, a short-circuit is less likely to occur. Unless otherwise specified, the thicknesses of the positive electrode layer and the negative electrode layer and the thickness ratio between them refer to those after sintering, for example, when the battery is produced by a production method like that in Examples to be described hereinafter.

The thickness of the positive electrode layer 3 is preferably not less than 50 µm, more preferably not less than 200 µm, preferably not more than 1000 µm, and more preferably not more than 600 µm. The thickness of the negative electrode layer 4 is preferably not less than 10 µm, more preferably not less than 40 µm, preferably not more than 200 µm, more preferably not more than 150 µm, and even more preferably not more than 100 µm.

In the present invention, as described previously, metal sodium preferably precipitates inside the negative electrode layer upon completion of charging of the battery. In this case, the precipitation of metal sodium in the solid electrolyte layer can be suppressed and, therefore, the safety of the all-solid-state sodium-ion secondary battery can be further increased.

In the present invention, the capacity of each of the positive electrode layer and the negative electrode layer can be calculated by multiplying the weight of an active material supported on the positive electrode layer or the negative electrode layer by the theoretical capacity of the active material. Alternatively, the capacity of each of the positive electrode and the negative electrode can be measured by producing respective half cells (with metal Na used as a counterelectrode) of the positive electrode and the negative electrode and electrically charging and discharging each of the half cells. In measuring the capacity of each of the positive electrode and the negative electrode in an all-solid-state sodium-ion secondary battery (a finished product), the capacity can be measured by taking apart the all-solid-state sodium-ion secondary battery to separate the positive electrode from the negative electrode, producing respective half cells of these electrodes, and then electrically charging and discharging each of the half cells.

In the present invention, the negative electrode capacity utilization of the negative electrode layer is preferably not less than 80%, more preferably not less than 101%, even more preferably not less than 116%, particularly preferably not less than 120%, preferably not more than 500%, more preferably not more than 400%, and even more preferably not more than 300%. In this case, the initial charge-discharge efficiency and the discharge capacity of the all-solid-state sodium-ion secondary battery can be further increased. The negative electrode capacity utilization of the negative electrode layer can be calculated from (the capacity of the battery) / (the capacity of the negative electrode). It should be noted that when a charge-discharge test is conducted with reference to the capacity of the positive electrode as in Examples to be described hereinafter, the negative electrode capacity utilization of the negative electrode layer can be calculated on the assumption that (the capacity of the battery) = (the capacity of the positive electrode).

Hereinafter, a detailed description will be given of each of the layers constituting the all-solid-state sodium-ion secondary battery according to the present invention, such as the all-solid-state sodium-ion secondary battery 1.

### (Solid Electrolyte Layer)

The solid electrolyte constituting the solid electrolyte layer is preferably made of a sodium-ion conductive oxide. Examples of the sodium-ion conductive oxide include compounds containing: at least one selected from among Al, Y, Zr, Si, and P; Na; and O. A specific example is beta-alumina or NASICON crystals either of which has an excellent sodium-ion conductivity. The preferred sodium-ion conductive oxide is β-alumina or P"-alumina. These materials have more excellent sodium-ion conductivity.

Beta-alumina includes two types of crystals: β-alumina (theoretical composition formula: Na₂O·11Al₂O₃) and P"-alumina (theoretical composition formula: Na₂O·5.3Al₂O₃). β"-alumina is a metastable material and is therefore generally used in a state in which Li₂O or MgO is added as a stabilizing agent thereto. P"-alumina has a higher sodium-ion conductivity than β-alumina. Therefore, β"-alumina alone or a mixture of β"-alumina and β-alumina is preferably used and Li₂O-stabilized P"-alumina (Na_{1.7}Li_{0.3}Al_{10.7}O₁₇) or MgO-stabilized β"-alumina ((Al_{10.32}Mg_{0.68}O₁₆) (Na_{1.68}O)) is more preferably used.

Examples of NASICON crystals include Na₃Zr₂Si₂PO₁₂, Na_{3.4}Zr₂Si_{2.4}P_{0.6}O₁₂, Na_{3.4}Zr_{1.9}Mg_{0.1}Si_{2.4}P_{0.6}O₁₂, Na_{3.4}Zr_{1.9}Zn_{0.1}Si_{2.4}P_{0.6}O₁₂, Na_{3.4}Zr_{1.9}Mg_{0.1}Si_{2.2}P_{0.8}O₁₂, Na_{3.4}Zr_{1.9}Zn_{0.1}Si_{2.2}P_{0.8}O₁₂, Na_{3.2}Zr_{1.3}Si_{2.2}P_{0.7}O_{10.5}, Na₃Zr_{1.6}Ti_{0.4}Si₂PO₁₂, Na₃Hf₂Si₂PO₁₂, Na_{3.4}Zr_{0.9}Hf_{1.4}Al_{0.6}Si_{1.2}P_{1.8}O₁₂, Na₃Zr_{1.7}Nb_{0.24}Si₂PO₁₂, Na_{3.6}Ti_{0.2}Y_{0.7}Si_{2.8}O₉, Na₃Zr_{1.88}Y_{0.12}Si₂PO₁₂, Na_{3.12}Zr_{1.88}Y_{0.12}Si₂PO₁₂, and Na_{3.6}Zr_{0.13}Yb_{1.67}Si_{0.11}P_{2.9}O₁₂. As the NASICON crystals, Na_{3.4}Zr₂Si_{2.4}P_{0.5}O₁₂ and Na₃Zr_{1.7}Nb_{0.24}Si₂PO₁₂ are particularly preferred because they have an excellent sodium-ion conductivity.

The solid electrolyte layer can be produced by mixing raw material powders, forming the mixed raw material powder into a shape, and then firing it. For example, the solid electrolyte layer can be produced by making the raw material powders into a slurry, forming the slurry into a green sheet, and then firing the green sheet. Alternatively, the solid electrolyte layer may be produced by the sol-gel method.

The thickness of the solid electrolyte layer is preferably within a range of 5 µm to 1000 µm and more preferably within a range of 20 µm to 200 µm . If the thickness of the solid electrolyte layer is too small, the mechanical strength decreases to become easily broken and, therefore, an internal short-circuit is likely to occur. If the thickness of the solid electrolyte layer is too large, the distance of sodium ion conduction accompanying charge and discharge becomes long, the internal resistance therefore becomes high, and, thus, the discharge capacity and the operating voltage are likely to decrease. In addition, the energy density per unit volume of the all-solid-state sodium-ion secondary battery is likely to decrease.

### (Positive Electrode Layer)

The type of the positive-electrode active material contained in the positive electrode layer is not particularly limited, but is preferably a positive-electrode active material made of a crystallized glass containing crystals represented by a general formula NaₓM_{y}P₂O_{z} (where 1 ≤ x ≤ 2.8, 0.95 ≤ y ≤ 1.6, 6.5 ≤ z ≤ 8, and M is at least one selected from the group consisting of Fe, Ni, Co, Mn, and Cr) . Particularly, the positive-electrode active material is preferably made of a crystallized glass containing crystals represented by a general formula NaₓMP₂O₇ (where 1 ≤ x ≤ 2 and M is at least one selected from among Fe, Ni, Co, Mn, and Cr). Examples that can be used as positive-electrode active material crystals as just described include Na₂FeP₂O₂, Na₂CoP₂O₇, and Na₂NiP₂O₇.

In the present disclosure, a crystallized glass means a glass obtained by heating (firing) a precursor glass containing an amorphous phase to precipitate crystals (crystallize the precursor glass) . The amorphous phase may fully transition into a crystal phase or the amorphous phase may partially remain. Furthermore, a single kind of crystal may be precipitated or two or more kinds of crystals may be precipitated. For example, whether or not to be a crystallized glass can be determined by a peak angle shown by powder X-ray diffraction (XRD).

The positive electrode layer may contain a sodium-ion conductive solid electrolyte and/or a conductive agent. The ratio among the component materials in the positive electrode layer may be, for example, in terms of % by mass, 60% to 99.9% for the positive-electrode active material, 0% to 30% for the sodium-ion conductive solid electrolyte, and 0.1% to 10% for the conductive agent.

Examples of the sodium-ion conductive solid electrolyte that can be used include those described in the section for the solid electrolyte layer. The sodium-ion conductive solid electrolyte is preferably used in powdered form. The average particle diameter of powder of the sodium-ion conductive solid electrolyte is preferably not less than 0.05 µm and not more than 3 µm, more preferably not less than 0.05 µm and less than 1.8 µm, even more preferably not less than 0.05 µm and not more than 1.5 µm, particularly preferably not less than 0.1 µm and not more than 1.2 µm, and most preferably not less than 0.1 µm and not more than 0.7 µm.

An example of the conductive agent that can be used is a conductive carbon. Examples of the conductive carbon include acetylene black, carbon black, Ketjen black, vapor-grown carbon fiber carbon conductive agent (VGCF), and carbon nanotube. The conductive agent is preferably a carbon-based conductive agent made of any of materials as just described.

The positive electrode layer can be formed, for example, by forming an electrode material layer containing a positive-electrode active material precursor and, as necessary, a sodium-ion conductive solid electrolyte powder and a conductive agent, on a principal surface of the solid electrolyte layer and firing the electrode material layer. The electrode material layer can be obtained, for example, by applying a paste containing the positive-electrode active material precursor and, as necessary, the solid electrolyte powder and the conductive agent and drying the paste. As necessary, the paste may contain a binder, a plasticizer, a solvent or so on. Alternatively, the electrode material layer may be formed of a powder compact.

The temperature for drying the paste is not particularly limited, but, for example, may be not lower than 30°C and not higher than 150°C. The time for drying the paste is not particularly limited, but, for example, may be not less than 5 minutes and not more than 600 minutes.

The atmosphere during the firing is preferably a reductive atmosphere. The firing temperature (maximum temperature) may be, for example, 400°C to 600°C and the holding time at the firing temperature may be, for example, five minutes to less than three hours. The atmosphere during the firing may be an inert atmosphere, such as in N₂, Ar or He, or a vacuum atmosphere.

### Positive-Electrode Active Material Precursor:

The positive-electrode active material precursor (positive-electrode active material precursor powder) is preferably made of an amorphous oxide material that generates active material crystals when subjected to firing. In the case where the positive-electrode active material precursor powder is made of an amorphous oxide material, when subjected to firing, the amorphous oxide material not only generates active material crystals, but also can be softened and fluidified to form a dense positive electrode layer. In addition, when the positive electrode layer contains a solid electrolyte, the positive-electrode active material and the solid electrolyte can be integrated. Alternatively, in the case where the positive electrode layer makes contact with the solid electrolyte layer, both the layers can be integrated. As a result, an ion conduction path can be formed better, which is favorable. In the present invention, the term "amorphous oxide material" is not limited to a fully amorphous oxide material and includes those partially containing crystals (for example, those having a crystallinity of 10% or less).

The positive-electrode active material precursor powder preferably contains, in terms of % by mole of the following oxides, 25% to 55% Na₂O, 10% to 30% Fe₂O₃+Cr₂O₃+MnO+CoO+NiO, and 25% to 55% P₂O₅. The reasons why the composition is limited as just described will be described below. In the following description of the respective contents of the components, "%" refers to "% by mole" unless otherwise stated.

Na₂O is a main component of the active material crystals represented by the general formula NaₓM_{y}P₂O_{z} (where M represents at least one transition metal element selected from among Cr, Fe, Mn, Co and Ni, 1 ≤ x ≤ 2.8, 0.95 ≤ y ≤ 1.6, and 6.5 ≤ z ≤ 8). The content of Na₂O is preferably 25% to 55% and more preferably 30% to 50%. When the content of Na₂O is within the above range, the charge and discharge capacities can be further increased.

Fe₂O₂, Cr₂O₃, MnO, CoO, and NiO are also main components of the active material crystals represented by the general formula NaₓM_{y}P₂O_{z}. The content of Fe₂O₃+Cr₂O₃+MnO+CoO+NiO is preferably 10% to 30% and more preferably 15% to 25%. When the content of Fe₂O₃+Cr₂O₃+MnO+CoO+NiO is the above lower limit or more, the charge and discharge capacities can be further increased. On the other hand, when the content of Fe₂O₃+Cr₂O₃+MnO+CoO+NiO is the above upper limit or less, it can be less likely that undesirable crystals, such as Fe₂O₃, Cr₂O₃, MnO, CoO or NiO, precipitate. In order to increase the cycle characteristics, Fe₂O₃ is preferably positively contained in the positive-electrode active material precursor powder. The content of Fe₂O₃ is preferably 1% to 30%, more preferably 5% to 30%, even more preferably 10% to 30%, and particularly preferably 15% to 25%. The content of each component of Cr₂O₃, MnO, CoO, and NiO is preferably 0% to 30%, more preferably 10% to 30%, and even more preferably 15% to 25%. In containing at least two components selected from among Fe₂O₃, Cr₂O₃, MnO, CoO, and NiO in the positive-electrode active material precursor powder, the total content of them is preferably 10% to 30% and more preferably 15% to 25%.

P₂O₅ is also a main component of the active material crystals represented by the general formula NaₓM_{y}P₂O_{z}. The content of P₂O₅ is preferably 25% to 55% and more preferably 30% to 50%. When the content of P₂O₅ is within the above range, the charge and discharge capacities can be further increased.

The positive-electrode active material precursor powder may contain, in addition to the above components, V₂O₅, Nb₂O₅, MgO, Al₂O₃, TiO₂, ZrO₂ or Sc₂O₃. These components have the effect of increasing the conductivity (electronic conductivity), which facilitates the enhancement of the rapid charge and discharge characteristics. The total content of these components is preferably 0% to 25% and more preferably 0.2% to 10%. When the content of these components is the above upper limit or less, heterogeneous crystals not contributing to the battery characteristics are less likely to be generated and, therefore, the charge and discharge capacities can be further increased.

Aside from the above components, the positive-electrode active material precursor powder may contain SiO₂, B₂O₃, GeO₂, Ga₂O₃, Sb₂O₃ or Bi₂O₃. When containing these components, a positive-electrode active material precursor powder having a further increased glass formation ability and being more homogeneous is likely to be obtained. The total content of these components is preferably 0% to 25% and more preferably 0.2% to 10%. Because these components do not contribute to the battery characteristics, an excessively large content of them leads to a tendency to decrease the charge and discharge capacities.

The positive-electrode active material precursor powder is preferably made by melting a raw material batch and forming the melt into a shape. This method is preferred because an amorphous positive-electrode active material precursor powder having excellent homogeneity can be easily obtained. Specifically, the positive-electrode active material precursor powder can be produced in the following manner.

First, raw materials are formulated to give a desired composition, thus obtaining a raw material batch. Next, the obtained raw material batch is melted. It is sufficient for the melting temperature to be appropriately adjusted so that the raw material batch can be homogeneously melted. For example, the melting temperature is preferably 800°C or higher and more preferably 900°C or higher. The upper limit of the melting temperature is not particularly limited, but an excessively high melting temperature leads to energy loss or evaporation of the sodium component and so on. Therefore, the melting temperature is preferably not higher than 1500°C and more preferably not higher than 1400°C.

Next, the obtained melt is formed into a shape. The method for forming the melt into a shape is not particularly limited. For example, the melt may be formed into a film with rapid cooling by pouring the melt between a pair of cooling rolls or formed into an ingot by casting the melt into a mold.

Subsequently, the obtained formed body is ground to obtain a positive-electrode active material precursor powder. The average particle diameter of the positive-electrode active material precursor powder is preferably not less than 0.01 µm and less than 0.7 µm, more preferably not less than 0.03 µm and not more than 0.6 µm, even more preferably not less than 0.05 µm and not more than 0.6 µm, and particularly preferably not less than 0.1 µm and not more than 0.5 µm.

### Binder:

The binder is a material for binding the raw materials (raw material powders) together. Examples of the binder include: cellulose derivatives, such as carboxymethyl cellulose, hydroxypropylmethyl cellulose, hydroxypropyl cellulose, ethyl cellulose, hydroxyethyl cellulose, and hydroxymethyl cellulose, or water-soluble polymers, such as polyvinyl alcohol; thermosetting resins, such as thermosetting polyimide, phenolic resin, epoxy resin, urea resin, melamine resin, unsaturated polyester resin, and polyurethane; polycarbonate-based resins, such as polypropylene carbonate; polyvinylidene fluoride; acrylic resins, such as polyacrylic acid; polyvinyl acetal; and polyvinyl butyral.

### (Negative Electrode Layer)

The type of the negative-electrode active material contained in the negative electrode layer is not particularly limited, but, for example, a carbon electrode material, such as hard carbon or soft carbon, can be used. The carbon electrode material is preferably hard carbon. However, the negative-electrode active material may contain a negative-electrode active material consisting mainly of an alloy of tin, bismuth, lead, phosphorous or others capable of absorbing sodium, or metal sodium. The negative electrode layer is preferably not a negative electrode layer composed of a single metal sodium layer.

The negative electrode layer may further contain a sodium-ion conductive solid electrolyte and/or a conductive agent. The ratio among the component materials in the negative electrode layer may be, for example, in terms of % by mass, 60% to 95% for the negative-electrode active material, 5% to 35% for the sodium-ion conductive solid electrolyte, and 0% to 5% for the conductive agent. Examples of the sodium-ion conductive solid electrolyte that can be used include those described in the section for the solid electrolyte layer. Examples of the conductive agent that can be used include those described in the section for the positive electrode layer.

Hereinafter, a description will be given of, as an example, a method for forming a negative electrode layer containing a carbon electrode material as a negative-electrode active material and a sodium-ion conductive solid electrolyte.

### Method for Forming Negative Electrode Layer:

First, a paste containing a carbon electrode material precursor and a sodium-ion conductive solid electrolyte is made. In making the paste, first, a sodium-ion conductive solid electrolyte precursor is prepared. In this stage, it is preferred to prepare a solution of sodium-ion conductive solid electrolyte precursor. Specific examples of the sodium-ion conductive solid electrolyte precursor and its solution will be described hereinafter. Furthermore, a carbon electrode material precursor (a precursor of carbon electrode material made of hard carbon) is prepared. Examples of the carbon electrode material precursor that can be used include appropriate sugars, biomass, and polymers.

Next, the solution of sodium-ion conductive solid electrolyte precursor and the carbon electrode material precursor are mixed and then dried. Thus, a powder mixture of the sodium-ion conductive solid electrolyte precursor and the carbon electrode material precursor is obtained. Next, the powder mixture is ground and then mixed with a conductive agent and a binder in an organic solvent. An example of the organic solvent that can be used is N-methyl-2-pyrrolidone. Thus, a paste is obtained.

Next, the paste is applied to a principal surface of the solid electrolyte layer. In this manner, a lamination step of layering the solid electrolyte layer and the paste serving as the electrode material layer to form a laminate is performed. Next, the laminate of the solid electrolyte layer and the paste is fired, for example, in an N₂ atmosphere at higher than 600°C and not higher than 1300°C. The firing may be performed in an inert atmosphere. For example, the firing may be performed in an atmosphere of Ar, Ne or He or in a vacuum. Alternatively, the firing may be performed in a reductive atmosphere containing H₂. When the firing is performed in an inert atmosphere or a reductive atmosphere, the initial charge-discharge efficiency of the negative-electrode active material can be further increased, which is favorable. So long as the carbon electrode is not oxidized or oxidatively decomposed, the atmosphere may contain a small amount of oxygen. The oxygen concentration may be, for example, 1000 ppm or less, but is not limited to this. In the manner as thus far described, a negative electrode layer can be produced.

### Carbon Electrode Material Precursor:

In using a sugar as the carbon electrode material precursor, examples include sucrose, cellulose, D-glucose, and sucrose. In using biomass as the carbon electrode material precursor, examples include cornstalk, sorghum stalk, pine cone, mangosteen, argan nut shell, chaff, dandelion, straw core, ramie fiber, cotton, kelp, and coconut meat skin. In using a polymer as the carbon electrode material precursor, examples include PAN (polyacrylonitrile), pitch, PVC (polyvinyl chloride) nanofiber, polyaniline, sodium polyacrylate, tire (polymer for tire), and phosphorous-doped PAN.

### Sodium-Ion Conductive Solid Electrolyte Precursor and Solution Thereof:

When the sodium-ion conductive solid electrolyte is beta-alumina, a sodium-ion conductive solid electrolyte precursor can be obtained, for example, by mixing aluminum nitrate, sodium nitrate, and lithium nitrate. In doing so, the ratio among the above materials is adjusted to give a desired composition ratio of the sodium-ion conductive solid electrolyte.

When the sodium-ion conductive solid electrolyte is NASICON crystals or Na₅XSi₄O₁₂ crystals (where X represents at least one selected from among group III transition metal elements and preferably rare earth elements), an example of the solution of sodium-ion conductive solid electrolyte precursor is a solution containing a sodium element and a transition metal element both constituting a sodium-ion conductive solid electrolyte and carbonate ions. In the solution, the sodium element is contained as sodium ions and the transition metal element is contained as transition metal ions. The sodium-ion conductive solid electrolyte precursor is made of, for example, a gelled product or a dried product from the solution of sodium-ion conductive solid electrolyte precursor. Furthermore, the sodium-ion conductive solid electrolyte is made of a fired product from the sodium-ion conductive solid electrolyte precursor.

A solution may also be used which differs from the above solution of sodium-ion conductive solid electrolyte precursor by containing nitrate ions instead of carbonate ions.

In the solution of sodium-ion conductive solid electrolyte precursor, carbonate ions are preferably coordinated bidentately to the transition metal element. In this case, the transition metal element is likely to be stably present in the solution.

The solution preferably contains NR⁴⁺ (where Rs are each independently a substituent of at least one selected from the group consisting of H, CH₃, C₂H₅, and CH₂CH₂OH) as counterions to the sodium ions. By doing so, the transition metal element is likely to be stably present in the solution.

The solution of sodium-ion conductive solid electrolyte precursor can be obtained, for example, by mixing liquid glass (sodium silicate), sodium tripolyphosphate, and a zirconium ammonium carbonate aqueous solution.

Materials that can be used as the binder include those described in the section for the positive electrode layer.

### (First Current Collector Layer and Second Current Collector Layer)

The respective materials for the first current collector layer and the second current collector layer are not particularly limited, but metallic materials, such as aluminum, titanium, silver, copper, stainless steel or an alloy of any of them, can be used for each of the current collector layers. These metallic materials may be used singly or in combination of two or more of them. The alloy of any of them means an alloy containing at least one of the above metals. The thickness of each of the first current collector layer and the second current collector layer is not particularly limited, but may be within a range of 0.1 µm to 1000 µm.

The method for forming the first current collector layer and the second current collector layer is not particularly limited and examples include physical vapor deposition methods, such as evaporation coating and sputtering, and chemical vapor deposition methods, such as thermal CVD, MOCVD, and plasma CVD. Other methods for forming the first current collector layer and the second current collector layer include liquid-phase deposition methods, such as plating, the sol-gel method, and spin coating. However, the first current collector layer and the second current collector layer are formed on the positive electrode layer and the negative electrode layer, respectively, preferably by sputtering because excellent adhesion is provided.

Hereinafter, the present invention will be described in more detail with reference to specific examples. The present invention is not at all limited to the following examples and can be embodied in appropriately modified forms without changing the gist of the invention.

### (Example 1)

### (a) Production of Solid Electrolyte Layer

A raw material was pre-fired at 1200°C to give a composition of β"-alumina as a solid electrolyte and ground, thus producing a β-alumina powder. The β-alumina powder was ground in a ball mill and then mixed with a binder and a solvent, thus producing a paste. A green sheet was formed from the paste and fired at 1550°C for 30 minutes, thus forming a 12 mm square, 0.1 mm thick solid electrolyte layer.

### (b) Production of Positive-Electrode Paste

A raw material prepared to provide, in terms of molar ratio, 40Na₂O-20Fe₂O₃-40P₂O₅ as a glass composition was melt at 1200°C for an hour in the atmosphere and cooled by twin rollers, thus producing a glass film. The obtained glass film was ground for 60 hours in a ball mill using a mixture of 5-mm diameter ZrO₂ balls, 3-mm diameter ZrO₂ balls, and 1-mm diameter ZrO₂ balls in ethanol, thus obtaining a glass powder having a specific surface area of 11.1 m²/g. The obtained glass powder was further ground for five hours in a planetary ball mill at 300 rpm using 0.3-mm diameter ZrO₂ balls in ethanol, thus obtaining a glass powder having a specific surface area of 32.1 m²/g.

An amount of 83% by mass of glass powder obtained as above, 13% by mass of P"-alumina (with a specific surface area of 45.2 m²/g) as a solid electrolyte, and 4% by mass of acetylene black (AB) as a conductive agent were mixed, thus producing a positive electrode composite material powder. An amount of 15% by mass of polypropylene carbonate (PPC) as a binder was further added to 100% by mass of positive electrode composite material powder obtained as above and N-methyl-2-pyrrolidone was further added as a solvent to give the positive electrode composite material powder a concentration of 50% by mass. These materials were mixed with a planetary centrifugal mixer, thus producing a positive-electrode paste.

### (c) Production of Negative-Electrode Paste

Liquid glass (sodium silicate: Na₂O·3SiO₂), a zirconium ammonium carbonate aqueous solution ((NH₄)₂Zr(OH)₂(CO₃)₂), and sodium tripolyphosphate (Na₅P₃O₁₀) were weighed 25 g in total to provide NASICON crystals having a composition ratio of Na₃Zr₂Si₂PO₁₂. These materials were added to 150 g of pure water, followed by stirring with a hot stirrer at 50°C for 24 hours. Thus, a solution of sodium-ion conductive solid electrolyte precursor (pH = 9.7) was obtained. Next, this solution was allowed to stand overnight in a thermostat bath at 5°C, thus turning it into a gel. In this manner, a sodium-ion conductive solid electrolyte precursor was prepared.

Sucrose being a carbon electrode material precursor and serving as a source of hard carbon and the sodium-ion conductive solid electrolyte precursor were mixed for an hour in a stirrer to give a weight ratio of 4:1, thus obtaining a mixture. Next, the mixture was dried for 12 hours in a thermostat bath at 60°C and then vacuum dried at 100°C for six hours, thus obtaining a powder mixture of the sodium-ion conductive solid electrolyte precursor and the carbon electrode material precursor. Next, the powder mixture was ground into powdered form in an agate mortar.

The powder mixture of the sodium-ion conductive solid electrolyte precursor and the carbon electrode material precursor and a conductive agent (acetylene black) were weighed to give a weight ratio of 19:1 and mixed, thus obtaining a mixed powder. An amount of 60 parts by mass of the mixed powder was mixed with 40 parts by mass of hard carbon powder (with an average particle diameter D50 of 1 µm), thus obtaining a negative electrode composite material powder. An amount of 15% by mass of polypropylene carbonate (PPC) as a binder was further added to 100% by mass of the negative electrode composite material powder and N-methyl-2-pyrrolidone was further added as a solvent to give the negative electrode composite material powder a concentration of 50% by mass. These materials were mixed with a planetary centrifugal mixer, thus producing a negative-electrode paste.

### (d) Formation of Negative Electrode

The negative-electrode paste was applied as a coating to a central portion of one principal surface of the 12 mm square, 0.1 mm thick solid electrolyte layer to have a thickness of 50 µm and a size of 10 mm square. The paste coating was dried for an hour in a thermostat bath at 60°C. Thereafter, the coating was fired under conditions of 800°C for two hours in an N₂ (99.99%) atmosphere, thus forming a negative electrode. The weight of the negative electrode supported was determined from (the weight of a laminate after the formation of the negative electrode) minus (the weight of the solid electrolyte layer). The determined weight of the negative electrode supported was multiplied by 0.8, which is a ratio of active material in the negative electrode, thus calculating the weight of hard carbon active material. Furthermore, the capacity of the negative electrode was calculated by estimating the capacity per g of the hard carbon at 300 mAh/g. As a result, the capacity of the negative electrode was 0.49 mAh.

### (e) Formation of Positive Electrode

The positive-electrode paste was applied as a coating to a central portion of the principal surface of the solid electrolyte layer on the side opposite to the negative electrode to have a thickness of 400 µm and a size of 10 mm square. The paste coating was dried for two hours in a thermostat bath at 60°C and then fired under conditions of holding at 500°C for 30 minutes in an N₂/H₂ (96/4 in % by volume terms) atmosphere, thus forming a positive electrode. The weight of the positive electrode supported was determined from (the weight of a laminate after the formation of the positive electrode) minus (the weight of the laminate before the formation of the positive electrode) . The determined weight of the positive electrode supported was multiplied by 0.83, which is a ratio of active material in the positive electrode, thus calculating the weight of Na₂FeP₂O₇ active material. The capacity of the positive electrode was calculated by estimating the capacity per g of the Na₂FeP₂O₇ crystallized glass (the Na₂FeP₂O₇ active material) at a theoretical capacity of 97 mAh/g. As a result, the capacity of the positive electrode was 1.4 mAh. Furthermore, the capacity of the negative electrode was divided by the capacity of the positive electrode, thus determining the N/P ratio (Negative Electrode Capacity/Positive Electrode Capacity).

### (f) Formation of Current Collector and Assembly of Coin Cell

A 500 nm thick aluminum-deposited film was formed as a current collector on the entire surface of the positive electrode or the negative electrode. Thereafter, the laminate was encapsulated into a CR2032 coin cell in an argon glove box, thus producing an all-solid-state cell.

### (g) Charge-Discharge Test

Based on the capacity of the positive electrode, the cell underwent a constant-current charge-discharge test at a current value set to give a C-rate of 0.05 (charge and discharge for 20 hours) in a thermostat bath at 30°C.

### (Examples 2 to 8 and Comparative Examples 1 to 7)

Cells underwent the charge-discharge test in the same manner as in Example 1 except that the thicknesses of paste coatings in forming the negative electrode and forming the positive electrode were changed as shown in Table 1 below.

### [Evaluation Results]

Fig. 2 is a graph showing results of the charge-discharge test in Example 1. Fig. 3 is a graph showing results of the charge-discharge test in Comparative Example 7.

As shown in Figs. 2 and 3, whereas the cell of Example 1 where the N/P ratio was 0.35 obtained a high initial charge-discharge efficiency, the cell of Comparative Example 7 where the N/P ratio was 4.82 exhibited a low discharge capacity and its initial charge-discharge efficiency was low. The initial charge-discharge efficiency was determined by dividing the discharge capacity by the charge capacity. In the same manner, the initial charge-discharge efficiencies in Examples 2 to 8 and Comparative Examples 1 to 6 were determined. The results are shown in Table 1 below. Table 1 also shows the respective thicknesses of negative electrode layers after firing, the respective thicknesses of positive electrode layers after firing, the respective thickness ratios after firing (Negative Electrode Layer/Positive Electrode Layer), and the respective negative electrode capacity utilizations. The negative electrode capacity utilization was calculated from (the cell capacity (the capacity of the positive electrode))/(the capacity of the negative electrode).

**[Table 1]**

| | N/P Ratio | Thickness of Negative-Electrode Paste | Thickness of Negative Electrode Layer After Firing | Thickness of Positive-Electrode Paste | Thickness of Positive Electrode Layer After Firing | Thickness Ratio | Charge Capacity | Discharge Capacity | Initial Charge-Discharge Efficiency | Negative Electrode Capacity Utilization |
|---|---|---|---|---|---|---|---|---|---|---|
| | (Negative Electrode Capacity/Positive Electrode Capacity) | (µm) | (µm) | (µm) | (µm) | (Negative Electrode Layer/Positive Electrode Layer) | (mAh/g) | ( mAh/g) | (%) | (%) |
| Example 1 | 0.35 | 50 | 30 | 400 | 200 | 0.15 | 87.4 | 70.5 | 81 | 286 |
| Example 2 | 0.42 | 75 | 45 | 400 | 200 | 0.23 | 87.5 | 64.6 | 74 | 238 |
| Example 3 | 0.48 | 75 | 45 | 375 | 190 | 0.24 | 85.3 | 60.1 | 70 | 208 |
| Example 4 | 0.83 | 100 | 60 | 375 | 190 | 0.32 | 86.4 | 57.1 | 66 | 120 |
| Example 5 | 0.91 | 100 | 60 | 350 | 175 | 0.34 | 83.1 | 522 | 62 | 110 |
| Example 6 | 0.96 | 100 | 60 | 325 | 160 | 0.38 | 87.4 | 53.5 | 61 | 104 |
| Example 7 | 1.06 | 100 | 60 | 300 | 150 | 0.40 | 86.1 | 51.9 | 60 | 94 |
| Example 8 | 1.10 | 100 | 60 | 275 | 135 | 0.44 | 77.0 | 42.8 | 56 | 91 |
| Comp. Ex. 1 | 1.27 | 100 | 60 | 250 | 125 | 0.48 | 91.3 | 46.7 | 51 | 79 |
| Comp. Ex. 2 | 1.57 | 100 | 60 | 225 | 110 | 0.55 | 88.1 | 42.3 | 48 | 64 |
| Comp. Ex. 3 | 1.74 | 100 | 60 | 200 | 100 | 0.60 | 80.2 | 33.1 | 41 | 57 |
| Comp. Ex. 4 | 209 | 100 | 60 | 150 | 75 | 0.80 | 79.2 | 26.2 | 33 | 48 |
| Comp. Ex. 5 | 3.42 | 100 | 60 | 100 | 50 | 1.20 | 85.1 | 22.8 | 27 | 29 |
| Comp. Ex. 6 | 3.67 | 100 | 60 | 75 | 40 | 1.50 | 84.9 | 23.9 | 28 | 27 |
| Comp. Ex. 7 | 4.82 | 100 | 60 | 50 | 25 | 2.40 | 980 | 17.0 | 17 | 21 |

As is obvious from Table 1, it was confirmed that the all-solid-state cells of Examples 1 to 8 where the N/P ratio was 1.10 or less were more excellent in charge-discharge efficiency as compared to the all-solid-state cells of Comparative Examples 1 to 7 where the N/P ratio was larger than 1.10, and therefore could increase the energy density.

Fig. 4 shows X-ray diffraction spectra of the negative electrode layer in the all-solid-state cell produced in Example 1. Fig. 5 shows X-ray diffraction spectra of the negative electrode layer in the all-solid-state cell produced in Comparative Example 1. In Figs. 4 and 5, the X-ray diffraction spectrum after the completion of discharging is shown by the broken line and the X-ray diffraction spectrum after the completion of charging is shown by the solid line.

The X-ray diffraction spectra of the negative electrode layer were measured by the wide-angle X-ray diffraction method. In the measurement, the all-solid-state cell after charging was taken apart in an argon glove box to avoid contact with the atmosphere and measured in the glove box with the all-solid-state cell sealed into an in-situ XRD cell with a Be window facing an object surface to be observed and without being exposed to the atmosphere. The source of X-rays used was CuKa rays (with a wavelength of 1.541 angstroms). The X-ray diffractometer used was stock number "SmartLab" manufactured by Rigaku Corporation.

As shown in Fig. 4, in the X-ray diffraction spectrum of the negative electrode layer in the all-solid-state cell produced in Example 1, a main peak of metal sodium of 20 = 29.3° appears after the completion of charging, which shows that metal sodium precipitated in the negative electrode layer. On the other hand, as shown in Fig. 5, in the X-ray diffraction spectrum of the negative electrode layer in the all-solid-state cell produced in Comparative Example 1, a main peak of metal sodium of 20 = 29.3° does not appear, which shows that metal sodium did not precipitate in the negative electrode layer.

Fig. 6 (a) is a SEM image of a cross section of the negative electrode layer at the completion of charging of the all-solid-state cell produced in Example 1 and Fig. 6(b) is an elemental mapping image of Na in the cross section of the negative electrode layer by SEM-EDX at the completion of charging. Fig. 7 (a) is a SEM image of a cross section of the negative electrode layer at the completion of discharging of the all-solid-state cell produced in Example 1 and Fig. 7 (b) is an elemental mapping image of Na in the cross section of the negative electrode layer by SEM-EDX at the completion of discharging. In Figs. 6 and 7, the SEM image in (a) and the elemental mapping image of Na by SEM-EDX in (b) are those observed with the same field of view.

The SEM observation and SEM-EDX analysis of the cross section of the negative electrode layer at the completion of charging were performed after the cross section was processed by argon ion milling without exposure to the atmosphere and the cell was charged in an inert atmosphere. The SEM observation was performed without exposure to the atmosphere and with a field-emission scanning electron microscope (stock number "S-4800") manufactured by Hitachi High-Tech Corporation. The EDX analysis was performed with stock number "QUANTAX FlatQUAD System Xflash 5060FQ" manufactured by Bruker AXS GmbH. Thereafter, the all-solid-state cell was conveyed, without exposure to the atmosphere, to a glove box, discharged therein, and subjected again to SEM observation and SEM-EDX analysis of the cross section of the negative electrode layer at the completion of discharging in the same manner as above.

Figs. 6(a) and 6(b) show that, at the completion of charging, sodium metal has precipitated in an encapsulated state in the vicinity of the solid electrolyte layer. Thus, the all-solid-state cell can be treated safely even when exposed to the atmosphere. Figs. 7 (a) and 7 (b) show that at the completion of discharging the precipitated sodium metal has been dissolved and disappeared and, thus, sodium metal can be reversibly dissolved and precipitated. Thus, the initial charge-discharge efficiency can be improved and a high-energy-density battery can be formed.

### [Reference Signs List]

1 ... all-solid-state sodium-ion secondary battery
2 ... solid electrolyte layer
2a, 2b ... first and second principal surfaces
3 ... positive electrode layer
4 ... negative electrode layer
5, 6 ... first and second current collector layers

## Claims

1. An all-solid-state sodium-ion secondary battery comprising:
a solid electrolyte layer having a first principal surface and a second principal surface opposed to each other;
a positive electrode layer provided on the first principal surface of the solid electrolyte layer; and
a negative electrode layer provided on the second principal surface of the solid electrolyte layer,
a capacity ratio of the negative electrode layer to the positive electrode layer (negative electrode layer/positive electrode layer) being not less than 0.10 and not more than 1.10.

2. The all-solid-state sodium-ion secondary battery according to claim 1, wherein the positive electrode layer contains a positive-electrode active material made of a crystallized glass containing crystals represented by a general formula NaₓM_{y}P₂O_{z} (where 1 ≤ x ≤ 2.8, 0.95 ≤ y ≤ 1.6, 6.5 ≤ z ≤ 8, and M is at least one selected from the group consisting of Fe, Ni, Co, Mn, and Cr).

3. The all-solid-state sodium-ion secondary battery according to claim 1 or 2, wherein the negative electrode layer contains a negative-electrode active material made of hard carbon.

4. The all-solid-state sodium-ion secondary battery according to claim 1 or 2, wherein
the positive electrode layer contains a positive-electrode active material made of a crystallized glass containing crystals represented by a general formula NaₓM_{y}P₂O_{z} (where 1 ≤ x ≤ 2.8, 0. 95 ≤ y ≤ 1.6, 6.5 ≤ z ≤ 8, and M is at least one selected from the group consisting of Fe, Ni, Co, Mn, and Cr),
the negative electrode layer contains a negative-electrode active material made of hard carbon, and
a thickness ratio of the negative electrode layer to the positive electrode layer (negative electrode layer/positive electrode layer) is not less than 0.05 and not more than 0.45.

5. The all-solid-state sodium-ion secondary battery according to claim 1 or 2, wherein the solid electrolyte layer contains a solid electrolyte being at least one selected from the group consisting of β-alumina, β"-alumina, and NASICON crystals.

6. The all-solid-state sodium-ion secondary battery according to claim 1 or 2, wherein metal sodium precipitates inside the negative electrode layer upon completion of charging of the battery.

7. An all-solid-state sodium-ion secondary battery comprising:
a solid electrolyte layer having a first principal surface and a second principal surface opposed to each other;
a positive electrode layer provided on the first principal surface of the solid electrolyte layer; and
a negative electrode layer provided on the second principal surface of the solid electrolyte layer,
the positive electrode layer containing a positive-electrode active material made of a crystallized glass containing crystals represented by a general formula NaₓM_{y}P₂O_{z} (where 1 ≤ x ≤ 2.8, 0. 95 ≤ y ≤ 1.6, 6.5 ≤ z ≤ 8, and M is at least one selected from the group consisting of Fe, Ni, Co, Mn, and Cr),
the negative electrode layer containing a negative-electrode active material made of hard carbon,
a thickness ratio of the negative electrode layer to the positive electrode layer (negative electrode layer/positive electrode layer) being not less than 0.05 and not more than 0.45.
